# EUROPÄISCHE PATENTSCHRIFT

(11) **EP 0 955 080 B1**
(45) Veröffentlichungstag und Bekanntmachung des Hinweises auf die Patenterteilung: **10.07.2002**
(21) Anmeldenummer: 99105632.6
(22) Anmeldetag: 19.03.1999
(51) Int. Cl.: B01D 53/94, B01J 29/06, B01J 37/30

(54) **Verfahren zur Herstellung eines Katalysators für die Reinigung von Abgasen**
Process to prepare a catalyst for exhaust gas purification
Procédé pour la préparation d'un catalyseur de purification des gaz d'échappement

(30) Priorität: 08.05.1998 DE 19820515
(43) Veröffentlichungstag der Anmeldung: 10.11.1999
(73) Patentinhaber: ALSI-PENTA Zeolithe GmbH, 92421 Schwandorf (DE)
(72) Erfinder: Tissler, Arno Dr., 93105 Tegernheim (DE); Turek, Thomas Dr., 76133 Karlsruhe (DE); Kögel, Markus, 67354 Römerberg (DE); Schwieger, Wilhelm Prof. Dr., 06110 Halle (DE); Rauscher, Marcus, 74592 Kirchberg/Jagst (DE); Mönnig, Ronny, 06120 Halle (DE); Kisnaduth, Kesore, 06110 Halle (DE)
(74) Vertreter: Müller-Wolff, Thomas, Dipl.-Ing.

(56) Entgegenhaltungen:
- EP-A- 0 625 369
- EP-A- 0 756 891
- US-A- 5 171 553
- VARGA ET AL.: "ZSM-5 zeolites modified by solid-state ion-exchange for NO decomposition" STUDIES IN SURFACE SCIENCE AND CATALYSIS, Bd. 94, - 1995 Seiten 665-672, XP002114685 Amsterdam

## Beschreibung

Die Erfindung betrifft ein Verfahren zur Herstellung eines Katalysatormaterials für die Reinigung von N₂- und NOₓ-haltigen Abgasen durch Einbringung einer metallischen Komponente in ein syntetisches Zeolithmaterial.

Es ist bekannt, zur Entfernung von Stickstoffoxiden aus Sauerstoff und Wasser enthaltenden Abgasen zeolithische Katalysatoren zu verwenden, die mindestens eine metallische katalytisch aktive Komponente enthalten. Bei diesen katalytisch aktiven Komponenten handelt es sich um Übergangs- oder Edelmetalle, ausgewählt unter Kupfer, Kobalt, Rhodium, Palladium , Iridium, Ruthenium, die durch Ionenaustausch in wässriger Lösung in das Zeolithmaterial eingebracht werden (siehe US 5171553 A).

Als Träger für die aktiven Komponenten wird ein siliciumreicher Zeolith mit einem SiAl-Verhältnis von über 5, vorzugsweise 10 - 50 verwendet. Das Einbringen von anderen aktiven Komponenten in den Zeolithen z.B. von Fe²⁺ kann in wässrigen Metallsalzlösungen nicht mit für die Katalyse ausreichendem Ergebnis erfolgen.

Zu spektroskopischen Untersuchungen wird die Einbringung von Eisen in den Zeolithen durch Festkörperionenaustausch in
Studies in Surface Science and Catalysis 69, Seite 43 bis 64 (1991) für Zeolith Y und
Studies in Surface Science and Catalysis 94, Seite 665 bis 672 für Zeolithe ZSM-5 beschrieben. Diese Methode des Festkörperionenaustausches stellt eine deutliche Vereinfachung für das Einbringen von Eisen in Zeolithe der ZSM-5-Struktur da, weil sie unter Normaldruck und -temperatur erfolgt.

Bei der Methode des Festkörperionenaustausches werden zur Herstellung der Fe-Zeolithe auf mechanischem Wege Mischungen aus der NH₄- und/oder H-Form des Zeolithen und einem Eisensalz durch intensives mechanisches Mischen in einer Kugelmühle bei Raumtemperatur hergestelt. Danach wird diese Mischung in einem Kammerofen an Luft kalziniert. Nach dem Kalzinieren wird die Fe-ZSM-5-Zeolithe in destilliertem Wasser intensiv gewaschen und nach Abfiltrieren des Zeolithen getrocknet.

Nach dem Einbringen der Edelmetalle durch Imprägnierung, wässrigen Ionenaustausch oder durch Vermahlung mit festen Salzen kann das Katalysatormaterial entweder in Pelletform, als Extrudat oder als extrudierten Wabenkörper eingesetzt werden. Dabei kommt es darauf an, daß der Katalysator eine hohe Aktivität bei niedrigen Temperaturen und eine hohe Unempfindlichkeit gegenüber SO₂ und Wasserdampf aufweist.

In der Zeitschrift Journal of Catalysis 167, Seiten 256 bis 265 (1997) ist in Figur 1 die Konversion als Funktion der Temperatur bei 1 mbar N₂O für Co-, Cu- und Fe-ZSM-5 dargestellt. Man erkennt, daß die Konversion bei Temperaturen unter 650 K keinen nennenswerten Umfang aufweist. Dieses ist insbesondere für die simultane Reduktion von Distickstoffmonoxid und Stickstoffmonoxid in Abgasen aus industriellen Prozessen und bei Wirbelschichtfeuerungen von Nachteil, so daß ein Bedarf für ein bei niedrigen Temperaturen einsetzbares Katalysatormaterial bestand.

Für den Einsatz des Katalysatormaterials ist ferner die Langzeitstabilität wichtig, insbesondere in einer Atmosphäre von Wasserdampf und Schwefeldioxid. Es ist bekannt, daß das Katalysatormaterial unter hydrothermalen Bedingungen stabil ist, wenn es unter anaeroben Bedingungen hergestellt wurde. Dieses liegt daran, daß die Fe²⁺-Kationen oxidiert werden in einem wässrigen Medium und dabei Eisenhydroxide ausgefällt werden. Die Herstellung in anaerober Atmosphäre ist jedoch aufwendig und wird außerdem nicht immer zu gleichbleibenden Ergebnissen hinsichtlich der Katalysatoraktivität.

Aufgabe der vorliegenden Erfindung ist es daher, ein Verfahren zur Herstellung eines Katalysatormaterials für die Reduktion von N₂O und NOₓ aus Abgasen anzugeben, das unter normalen Bedingungen in einem großtechnischem Maßstab durchgeführt werden kann. Das erzeugte Katalysatormaterial soll eine hohe katalytische Aktivität auch bei niedrigen Reaktionstemperaturen und auch in Gegenwart einer Wasserdampfatmosphäre und SO₂ aufweisen.

Die Aufgabe wird erfindungsgemäß durch die in den Patentansprüchen angegebenen Merkmale gelöst. Es hat sich gezeigt, daß die Anwesenheit von Ammonium, NH₃/NH₄-Zeolithen und N-haltigen Verbindungen bei der Festkörperreaktion im Zeolithmaterial ein hoch wirksames Katalysatormaterial liefert, das für die Entfernung von Distickstoffmonoxid bei der Herstellung von Vor- und Zwischenprodukten für synthetische Polymerfasern und bei der Produktion von Salpetersäure einsetzbar ist. Die Katalysatorpräparation kann in einem Reaktor erfolgen, da hier die Bedingungen exakt kontrollierbar sind, wobei die Komponenten in einer Mühle unter Normaldruck und unter Normaltemperatur vermischt und bei einer Temperatur von mindestens 300 °C getempert werden, bis der Ionenaustausch vollständig erfolgt ist und anschließend eine Abkühlung auf Raumtemperatur vorgenommen wird. Vorzugsweise wird als Mühle zur Vermischung der Komponenten eine Kugelmühle verwendet. Als geeignetes Zeolithmaterial haben sich sowohl Zeolithe vom Typ MFI in der H- oder Ammoniumform als auch Zeolithe vom Mordenith-Typ in der H- oder Ammoniumform sowie Zeolith β in der H- oder Ammoniumform erwiesen.

Die Mischung wird während der Temperung, vorzugsweise einer stickstoffhaltigen, ammoniak- oder aminhaltigen Atmosphäre, ausgesetzt, wobei die Temperung mit einer Aufheizrate größer 10 K pro Minute erfolgt.

Im folgenden wird die Erfindung anhand mehrerer Ausführungsbeispiele näher erläutert. Es zeigen:

| | |
|---|---|
| Erfindungsbeispiele 1 - 8 | Temperung in Anwesenheit einer stickstoffhaltigen Komponente 2; |
| | |
| Vergleichsbeispiele 1, 2 | Temperung ohne Komponente 2 |
| | |
| Tabelle | über Katalysatoraktivitäten bezüglich der N₂O-Spaltungsaktivität. |

### Beispiele

### Herstellung der Katalysatoren

### Beispiel 1

0,9 g FeSO₄ x 7 H₂O (Merck) und 5 g NH₄-MFI (SM27, ALSI-PENTA Zeolithe GmbH, Schwandorf) wurden in einer Kugelmühle für 1 h bei Raumtemperatur an Luft gemischt. Die Mischung wurde in einem Kammerofen an Luft in 3 h von Raumtemperatur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 2

0,9 g FeSO₄ x 7 H₂O (Merck), 1,5 g (NH₄)₂SO₁ (Merck) und 5 g H-MFI (SH27, ALSI-PENTA Zeolithe GmbH, Schwandorf) wurden in einer Kugelmühle für 1 h bei Raumtemperatur an Luft gemischt. Die Mischung wurde in einem Kammerofen an Luft in 3 h von Raumtemperatur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 3

0,9 g FeSO₄ x 7 H₂O (Merck), 1,5 g (NH₄)₂SO₄ (Merck) und 5 g NH₄-MFI (SM27, ALSI-PENTA Zeolithe GmbH, Schwandorf) wurden in einer Kugelmühle für 1 h bei Raumtemperatur an Luft gemischt. Die Mischung wurde in einem Kammerofen an Luft in 3 h von Raumtempe ratur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 4

0,9 g FeSO₄ x 7 H₂O (Merck) und 5 g NH₄-MFI (SM27, ALSI-PENTA Zeolithe GmbH, Schwandorf) wurden in einer Kugelmühle für 1 h bei Raumtemperatur an Luft gemischt. Die Mischung wurde in dem Rohrreaktor, der auch für die Durchführung der Messungen zur Entfernung von Distickstoffmonoxid benutzt wurde, im Stickstoffstrom in 3 h von Raumtemperatur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 5

0,9 g FeSO₄ x 7 H₂O und 5 g NH₄-MFI (SM27, ALSI-PENTA Zeolithe GmbH, Schwandorf) wurden in einer Kugelmühle für 1 h bei Raumtemperatur an Luft gemischt. Die Mischung wurde in einem bei 370 °C vorgeheizten Kammerofen gegeben und dort 1h an Luft gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 6

0,9 g FeSO₄ x 7 H₂O (Merck) und 5 g NH₄-MFI (SM27, ALSI-PENTA Zeolithe GmbH, Schwandorf) wurden in einer Kugelmühle für 1 h bei Raumtemperatur an Luft gemischt. Die Mischung wurde in dem Rohrreaktor, der auch für die Durchführung der Messungen zur Entfernung von Distickstoffmonoxid benutzt wurde, im Stickstoffstrom in 10 Minuten von Raumtemperatur auf 370 °C aufgeheizt und dort 1 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 7

5 g Ammoniummordenit mit einem SiO₂/Al₂O₃-Verhältnis von 18 wurden in einer Kugelmühle mit 0,9 g FeSO₄ x 7H₂O (Merck) für 1 h bei Raumtemperatur an Luft gemischt. Die Mischung wurde in dem Rohrreaktor, der auch für die Durchführung der Messungen zur Entfernung von Distickstoffmonoxid benutzt wurde, im Stickstoffstrom in 10 Minuten von Raumtemperatur auf 370 °C aufgeheizt und dort 1 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Beispiel 8

5 g Ammonium-Zeolith β mit einem SiO₂/Al₂O₃-Verhältnis von 40 wurden in einer Kugelmühle mit 0,9 g FeSO₄ x 7H₂O (Merck) für 1 h bei Raumtemperatur an Luft gemischt. Die Mischung wurde in dem Rohrreaktor, der auch für die Durchführung der Messungen zur Entfernung von Distickstoffmonoxid benutzt wurde, im Stickstoffstrom in 10 Minuten von Raumtemperatur auf 370 °C aufgeheizt und dort 1 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Vergleichsbeispiel 1

0,9 g FeSO₄ x 7 H₂O (Merck) und 5 g Na-MFI (SN27, ALSI-PENTA Zeolithe GmbH, Schwandorf) wurden in einer Kugelmühle für 1 h bei Raumtemperatur an Luft gemischt. Die Mischung wurde in einem Kammerofen an Luft in 3 h von Raumtemperatur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

### Vergleichsbeispiel 2

0,9 g FeSO₄ x 7 H₂O (Merck) und 5 g H-MFI (SH27, ALSI-PENTA Zeolithe GmbH, Schwandorf) wurden in einer Kugelmühle für 1 h bei Raumtemperatur an Luft gemischt. Die Mischung wurde in einem Kammerofen an Luft in 3 h von Raumtemperatur auf 550 °C aufgeheizt und dort 6 h gehalten. Nach Abkühlen wurde die Mischung intensiv mit Wasser gewaschen, getrocknet und zu Tabletten gepreßt. Nach Zerkleinern und Sieben wurde die gewünschte Katalysatorfraktion erhalten.

Durchführung der Versuche zur Entfernung von Distickstoffmonoxid
a) Als Versuchsapparatur für die N₂O-Entfernung dient ein 300 mm langes Quarzrohr mit einem Innendurchmesser von 11 mm, das in Vorheizzone, die mit Quarzsplit gefüllt ist, und Reaktionszone unterteilt ist. Zur Messung der Temperatur in der Reaktionszone wird ein Thermoelement benutzt, das sich in einem Innenrohr mit 3 mm Außendurchmesser befindet. Getestet wurden jeweils 0,5 ml Katalysator (Split mit 0,315 bis 0,5 mm Durchmesser). Für die Zersetzung von N₂O wurde ein Gasgemisch bestehend aus 1000 ppm Distickstoffmonoxid in Stickstoff bei einer Raumgeschwindigkeit (GHSV) von 60000 Nl Gas/l Katalysator h verwendet. Vor den Versuchen wurden die Katalysatoren für 1 h im Stickstoffstrom aktiviert. Der Distickstoffmonoxid-Umsatz wurde durch Messung der N₂O-Konzentration vor und nach dem Reaktor mit Hilfe eines Infrarot-Photometers bestimmt.
b) Alternativ wurde die Reduktion des Distickstoffmonoxids mit einem Kohlenwasserstoff getestet. Dazu wurde eine Gasmischung bestehend aus 1000 ppm N₂O, 4 Vol.% Sauerstoff, 1000 ppm Propan und bis zu 8 Vol.% Wasserdampf (Rest Stickstoff) bei GHSV = 30000 Nl Gas/l Katalysator h und ansonsten gleichen Versuchsbedingungen verwendet.

### Versuchsergebnisse

a) Zersetzung von Distickstoffmonoxid

| **Katalysator** | **Temperatur (°C)** | **Umsatz (%)** |
|---|---|---|
| 1 | 500 | 86 |
| 1 | 400 | 6 |
| 2 | 500 | 85 |
| 2 | 400 | 6 |
| 3 | 500 | 87 |
| 3 | 400 | 6 |
| 4 | 500 | 97 |
| 4 | 400 | 17 |
| 5 | 500 | 98 |
| 5 | 400 | 20 |
| 6 | 500 | 98 |
| 6 | 400 | 18 |
| 7 | 500 | 72 |
| 7 | 400 | 5 |
| 8 | 500 | 63 |
| 8 | 400 | 3 |
| V1 | 500 | 45 |
| V1 | 400 | 2 |
| V2 | 500 | 6 |
| V2 | 400 | 0 |

b) Reduktion von Distickstoffmonoxid

| **Katalysator** | **Temperatur (°C)** | **Wasserzusatz (Vol-%)** | **Umsatz (%)** |
|---|---|---|---|
| 1 | 500 | 0 | 99.5 |
| 1 | 400 | 0 | 99 |
| 1 | 400 | 8 | 98 |
| V1 | 500 | 0 | 99 |
| V1 | 400 | 0 | 95 |
| V2 | 500 | 0 | 60 |
| V2 | 400 | 0 | 2 |

Die Versuchsergebnisse belegen eindeutig die Überlegenheit derjenigen Katalysatoren, bei denen eine stickstoffhaltige Komponente während der Präparation benutzt wird.

## Patentansprüche

1. Verfahren zur Herstellung eines Katalysatormaterials für die Reinigung von N₂O- und NOₓ-haltigen Abgasen durch Einbringung einer metallischen Komponente in ein syntetisches Zeolithmaterial,
**dadurch gekennzeichnet,**
**daß** eine trockene Mischung aus folgenden Komponenten hergestellt wird
- Komponente 1, bestehend aus Ammoniumsalzen oder N-haltigen Verbindungen,
- Komponente 2, bestehend aus NH3/NH4-Zeolithen mit hochsilikatischen Zeolith-Strukturen und einem Si-Al-Verhältnis von mehr als 5,
- Komponente 3 bestehend aus einer Eisen- Verbindung als aktiver Komponente,
wobei die Komponenten 1, 2, 3 in einer Mühle unter Normaldruck und Normaltemperatur vermischt und bei einer Temperatur von mindestens 300 °C getempert werden, bis der Ionenaustausch vollständig erfolgt ist und anschließend eine Abkühlung auf Raumtemperatur erfolgt.

2. Verfahren nach Anspruch 1,
**dadurch gekennzeichnet,**
**daß** als Zeolithmaterial ein Zeolith vom Typ MFI in der Ammonium-Form verwendet wird.

3. Verfahren nach Anspruch 1,
**dadurch gekennzeichnet,**
**daß** als Zeolithmaterial ein Zeolith vom Mordenit-Typ in der Ammonium-Form verwendet wird.

4. Verfahren nach Anspruch 1,
**dadurch gekennzeichnet,**
**daß** als Zeolithmaterial ein Zeolith β in der Ammonium-Form verwendet wird.

5. Verfahren nach einem der vorhergehenden Ansprüche,
**dadurch gekennzeichnet,**
**daß** für die Vermischung der Komponenten 1, 2, 3 eine Kugelmühle verwendet wird.

6. Verfahren nach einem der vorhergehenden Ansprüche,
**dadurch gekennzeichnet,**
**daß** die Mischung während der Temperung einer stickstoffhaltigen Atmosphäre ausgesetzt wird.

7. Verfahren nach Anspruch 6,
**dadurch gekennzeichnet,**
**daß** die Temperung in einer ammoniak- oder aminhaltigen Atmosphäre erfolgt.

8. Verfahren nach Anspruch 6,
**dadurch gekennzeichnet,**
**daß** die Temperung mit einer Aufheizrate > 10 K pro Minute erfolgt.

## Claims

1. A process of producing a catalyst material for purifying N₂O- and NOₓ-containing exhaust gases by introducing a metallic component into a synthetic zeolite material,
**characterised in**
**that** there is produced a dry mixture consisting of the following components:
- component 1 consisting of ammonium salts or N-containing compounds,
- component 2 consisting of NH3/NH4 zeolites with highly siliceous zeolite structures and a Si/Al ratio in excess of 5,
- component 3 consisting of an iron compound constituting the active component,
wherein components 1, 2, 3 are mixed in a mill under standard pressure and a standard temperature and tempered at a temperature of at least 300 °C until the ion exchange has been completed, and wherein subsequently the components are cooled to room temperature.

2. A process according to claim 1,
**characterised in**
**that** the zeolite material used is a zeolite of type MFI in the form of ammonium.

3. A process according to claim 1,
**characterised in**
**that** the zeolite material used is a zeolite of the mordenite type in the form of ammonium.

4. A process according to claim 1,
**characterised in**
**that** the zeolite material used is a zeolite β in the form of ammonium.

5. A process according to any one of the preceding claims,
**characterised in**
**that** components 1, 2, 3 are mixed by a ball mill.

6. A process according to any one of the preceding claims,
**characterised in**
**that**, while being tempered, the mixture is subjected to a nitrogen-containing atmosphere.

7. A process according to claim 6,
**characterised in**
**that** tempering takes place in an ammonia- or amine-containing atmosphere.

8. A process according to claim 6,
**characterised in**
**that** tempering takes place at a heating rate > 10 K per minute.

## Revendications

1. Procédé pour la préparation d'une matière de catalyseur destinée à la purification de gaz d'échappement contenant N₂O et NOₓ par introduction d'un constituant métallique dans une matière de zéolite synthétique,
**caractérisé**
**en ce que** l'on prépare un mélange sec à partir des constituants suivants :
- constituant 1, constitué de sels d'ammonium ou de composés contenant N,
- constituant 2, constitué de zéolites NH3/NH4 avec des structures de zéolite à teneur élevée en silicate et un rapport Si-Al supérieur à 5,
- constituant 3, constitué d'un composé du fer comme constituant actif,
les constituants 1, 2, 3 étant mélangés dans un broyeur à pression atmosphérique et à température ambiante et étant maintenus à une température d'au moins 300 °C jusqu'à ce que l'échange ionique soit complètement réalisé et un refroidissement jusqu'à température ambiante étant ensuite réalisé.

2. Procédé selon la revendication 1, **caractérisé en ce que** l'on utilise comme matière de zéolite une zéolite de type MFI dans la forme d'ammonium

3. Procédé selon la revendication 1, **caractérisé en ce que** l'on utilise comme matière de zéolite une zéolite de type mordénite dans la forme ammonium.

4. Procédé selon la revendication 1, **caractérisé en ce que** l'on utilise comme matière de zéolite une zéolite β dans la forme ammonium.

5. Procédé selon l'une quelconque des revendications précédentes, **caractérisé en ce que** l'on utilise pour le mélange des constituants 1, 2, 3 un broyeur à galets.

6. Procédé selon l'une quelconque des revendications précédentes, **caractérisé en ce que** l'on expose le mélange pendant le maintien à température à une atmosphère contenant de l'azote.

7. Procédé selon la revendication 6, **caractérisé en ce que** l'on réalise le maintien à température dans une atmosphère contenant de l'ammoniac ou une amine.

8. Procédé selon la revendication 6, **caractérisé en ce que** le maintien à température est réalisé à une vitesse d'échauffement > 10 K par minute.
